Europäisches Patentamt

European Patent Office

Office européen des brevets

(19)

(11) Veröffentlichungsnummer: **0 508 045 A1**

# (12) EUROPÄISCHE PATENTANMELDUNG

(21) Anmeldenummer: **92100963.5**

(22) Anmeldetag: **22.01.92**

(51) Int. Cl.5: **F16J 15/08**

(30) Priorität: **10.04.91 DE 4111658**

(43) Veröffentlichungstag der Anmeldung:
**14.10.92 Patentblatt 92/42**

(84) Benannte Vertragsstaaten:
**DE FR GB IT**

(71) Anmelder: **GOETZE AG**
**Bürgermeister-Schmidt-Strasse 17**
**W-5093 Burscheid 1(DE)**

(72) Erfinder: **Schumacher, Rolf**
**Salierring 8 - 10**
**W-5000 Köln 1(DE)**

(54) **Metallische Flachdichtung, insbesondere Zylinderkopfdichtung.**

(57) Bei einer metallischen Flachdichtung aus einem Laminat übereinanderliegender Metallblechplatten, wie insbesondere einer Zylinderkopfdichtung für Verbrennungskraftmaschinen, mit einem Zylinderkopf aus einer Leichtmetallegierung und einem Motorblock aus grauem Gußeisen besitzen die übereinanderliegenden Metallblechplatten unterschiedliche thermische Ausdehnungskoeffizienten, welche sich stufenweise vom thermischen Ausdehnungskoeffizienten des Zylinderkopfes zum thermischen Ausdehnungskoeffizienten des Motorblockes verringern. Auf diese Weise werden auf die Dichtung wirkende Schiebebewegungen durch thermische Ausdehnungsunterschiede der abzudichtenden Bauteile in kleine Bewegungen unterteilt, welche keine Zerstörungen der Dichtungen mehr hervorrufen.

FIG. 2

EP 0 508 045 A1

Die Erfindung betrifft eine metallische Flachdichtung aus einem Laminat aus übereinanderliegenden Metallblechplatten zur Abdichtung von Bauteilen aus Werkstoffen mit unterschiedlichen thermischen Ausdehnungskoeffizienten, wie insbesondere eine Zylinderkopfdichtung für Verbrennungskraftmaschinen, mit einem Zylinderkopf aus einem Leichtmetall und einem Zylinderblock aus einer Gußeisenlegierung.

Zylinderkopfdichtungen für Verbrennungskraftmaschinen aus einem Laminat übereinanderliegender Metallblechplatten und zumindest an den abzudichtenden Durchgangsöffnungen die aufeinanderliegenden Platten verbindenden metallischen Einfassungen sind beispielsweise aus der DE-OS 21 20 841 bekannt. Bei Verbrennungskraftmaschinen mit Zylinderköpfen aus Aluminium und Motorblökken aus Gußeisenlegierungen dehnen sich beim Erhitzen im motorischen Betrieb die abzudichtenden Bauteile entsprechend ihrer unterschiedlichen thermischen Ausdehnungskoeffizienten unterschiedlich stark aus, es kommt zu Schiebebewegungen der Bauteile zueinander mit entsprechender reibender Belastung der dazwischen gespannten Zylinderkopfdichtung. Diese Belastung kann zum Verschieben der einzelnen Metallblechlagen führen, und die Dichtung kann schließlich durch Verschleiß zerstört werden.

Zur Abhilfe werden nach der DE-OS 21 20 841 die Oberflächen der aufeinanderliegenden Metallblechlagen durch Sandstrahlen aufgerauht und korrosionsfest beschichtet, so daß ein Gleiten der Metallblechlagen aufeinander und ihre Korrosion ausgeschlossen werden. Derartige Maßnahmen sind allerdings aufwendig und unwirtschaftlich. Das Aufrauhen muß an gegebenenfalls sehr dünnen Metallblechen gegebenenfalls nur partiell durch Sandstrahlen erfolgen, und das Beschichten der Metallbleche mit Korrosionsschutzschichten verteuert die Dichtungsherstellung wesentlich.

Nach der US-PS 3.924.863 werden als Auspuffverbindungen in Verbrennungskraftmaschinen Asbestfaservliesdichtungen eingesetzt, die auf ihrer thermisch weniger belasteten Dichtfläche mit Metallblechen mit hohen thermischen Ausdehnungskoeffizienten, wie Kupfer oder Aluminium, abgedeckt sind, während auf ihrer thermisch hoch belasteten Dichtfläche eine Metallplatte aus Stahl mit entsprechend niedrigen thermischen Ausdehnungskoeffizienten angeordnet ist. Auf diese Weise werden die Ausdehnungsunterschiede der unterschiedlich abzudichtenden Bauteile ausgeglichen, und die Dichtung bleibt vor Zerstörungen geschützt.

Die überwiegend aus Weichstoff bestehende Flachdichtung ist jedoch nicht für alle Einsatzfälle, insbesondere bei Verbrennungskraftmaschinen mit hoher Dichtpressungsbelastung, geeignet.

Der vorliegenden Erfindung liegt daher die Aufgabe zugrunde, eine Flachdichtung gemäß Oberbegriff des Hauptpatentanspruches zu schaffen, welche vor Zerstörungen im Betrieb durch thermisch bedingte Schiebebewegungen der abzudichtenden Bauteile weitgehend geschützt ist. Die Dichtung soll zugleich einfach und kostensparend, vor allem in der Massenfertigung, herstellbar sein.

Erfindungsgemäß wird diese Aufgabe durch eine Flachdichtung gelöst, deren übereinanderliegende Metallblechlagen aus Metallen mit unterschiedlichen thermischen Ausdehnungskoeffizienten bestehen, wobei die einzelnen Metallblechlagen mit stufenweise sich steigernden thermischen Ausdehnungskoeffizienten übereinanderliegend angeordnet sind. Bevorzugt besitzen dabei die beiden äußeren Deckbleche der Dichtung jeweils den thermischen Ausdehnungskoeffizienten des Bauteiles, an dem sie jeweils abdichtend anliegen, während die thermischen Ausdehnungskoeffizienten der dazwischenliegenden Metallblechplatten sich stufenweise vom Wert der oberen Deckplatte auf den Wert der unteren Deckplatte verändern.

Im Sinne der Erfindung kann der thermische Ausdehnungskoeffizient von äußerer Deckplatte und anliegendem Bauteil sich unterscheiden, so daß bereits zwischen Bauteil und anliegender Deckplatte ein Sprung des thermischen Ausdehnungskoeffizienten besteht.

Beim Erhitzen im Betrieb unter Erwärmung der abzudichtenden Bauteile und der Flachdichtung dehnen sich die Bauteile und die einzelnen Metallblechlagen entsprechend ihrer thermischen Ausdehnungskoeffizienten unterschiedlich stark aus. Die auf die Flachdichtung selbst wirkende Schiebebewegung ist jetzt aber durch die abgestuften thermischen Ausdehnungskoeffizienten der einzelnen Metallblechlagen in so kleine einzelne Schiebebewegungen unterteilt, die kaum noch Verschiebungen der Metallblechlagen oder gar Zerstörungen an der Dichtung hervorrufen können. Gefunden wurde dabei, daß die einzelnen Metallblechlagen etwa gleich groß sein sollten und die Flachdichtung selbst aus mindestens drei, bevorzugt aber fünf bis acht Metallblechlagen mit abgestuften thermischen Ausdehnungskoeffizienten bestehen sollte.

Die Erfindung ermöglicht es, vor allem metallische Zylinderkopfdichtungen für Verbrennungskraftmaschinen mit Zylinderköpfen aus Aluminium oder Aluminiumlegierungen und Motorblöcken aus grauem Gußeisen einfach und kostensparend herzustellen. Die linearen thermischen Ausdehnungskoeffizienten von Aluminium und grauem Gußeisen liegen bei etwa $24 \times 10^{-6}$ und $9 \times 10^{-6}$ m/m x Grad, so daß im motorischen Betrieb insbesondere beim periodischen Erhitzen und Abkühlen zwischen Zylinderlopf und Motorblock erhebliche Schiebebewegungen entstehen, die auf die dazwischengespannte Flachdichtung einwirken. In der erfindungsgemäßen Flachdichtung werden aber die Schiebebewegungen in so kleine Einzelbewegungen unterteilt, die selbst keine Zerstörungen mehr hervorrufen können.

Die Herstellung der erfindungsgemäßen Flachdichtung ist relativ einfach und nicht aufwendiger als bei herkömmlich laminierten metallischen Flachdichtungen. Metallbleche mit unterschiedlichen thermischen Ausdehnungskoeffizienten sind im Handel zum Beispiel als Aluminiumbleche, Aluminiumlegierungsbleche, Kupferbleche, Messingbleche, Bronzebleche und/oder legierte und unlegierte Stahlbleche erhältlich und müssen nur noch entsprechend dem Anwendungsfall kombiniert werden.

Beim bevorzugten Einsatz der Flachdichtung als Zylinderkopfdichtung für Verbrennungskraftmaschinen mit einem Zylinderkopf aus Aluminium und einem Motorblock aus Gußeisen besteht das obere am Zylinderkopf anliegende Deckblech der Dichtung aus einer Aluminiumlegierung, und die darunterliegenden Metallblechplatten bestehen aus unterschiedlich legierten Stählen mit unterschiedlichen thermischen Ausdehnungskoeffizienten, die so angeordnet sind, daß ihre thermischen Ausdehnungskoeffizienten stufenweise zur Motorblockseite so abnehmen, daß die unterste Stahlblechlage etwa den thermischen Ausdehnungskoeffizienten wie das Gußeisen des Motorblockes besitzt.

Die vor allem entsprechend der Erfindung hergestellten Zylinderkopfdichtungen sind an den schwierigen Dichtstellen bei modernen Verbrennungskraftmaschinen mit Zylinderköpfen aus Aluminium und Motorblöcken aus Gußeisen problemlos und zerstörungssicher einsetzbar, wobei die Herstellung der Zylinderkopfdichtungen auch in der Massenfertigung einfach und kostengünstig ist.

In bevorzugten Ausführungsbeispielen besteht die erfindungsgemäße Flachdichtung aus dem Laminat der übereinanderliegenden Metallblechplatten, das gegebenenfalls lose durch Umbördeln der äußeren Metalldeckbleche oder durch metallische Einfassungen an den abzudichtenden Durchgangsöffnungen zusammengehalten ist. Falls erforderlich, können einzelne Metallbleche durch Kleben oder Schweißen miteinander verbunden sein, oder die Metallblechlagen können, wie an und für sich bei laminierten Metalldichtungen bekannt, gegebenenfalls auch einzeln mit die Durchgangsöffnungen umgebenden Sicken versehen sein. Ebenso können, wie an und für sich bei Metalldichtungen bekannt, in Flüssigkeitsöffnungen polymere Abdichtringe eingesetzt und die äußeren Deckbleche oder auch die dazwischen liegenden Metallblechlagen mit polymeren Auflagen und/oder Überzügen sowie mit Schutzschichten versehen sein.

Die Erfindung wird durch die beiden Abbildungen näher erläutert, wobei

Figur 1 die Aufsicht auf ein Teilstück einer erfindungsgemäßen Zylinderkopfdichtung und

Figur 2 einen Querschnitt durch die Zylinderkopfdichtung der Figur 1 in der Linie II-II' zeigt.

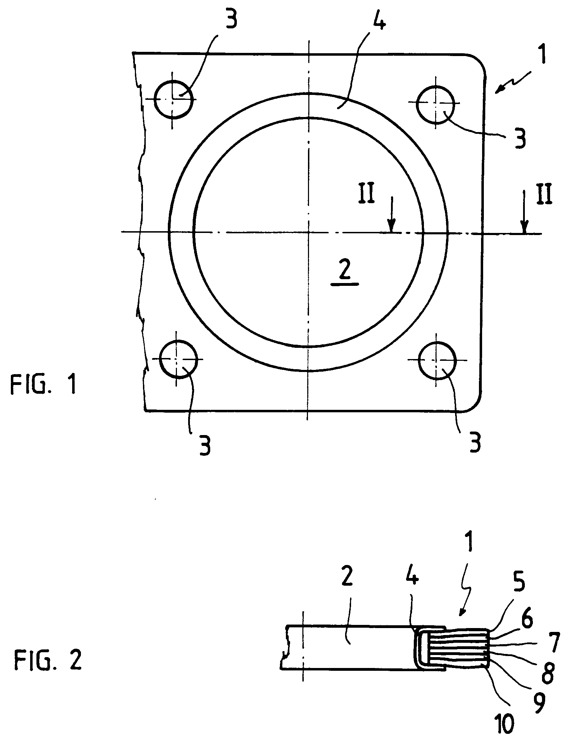

In Figur 1 ist (1) die Zylinderkopfdichtung mit der Brennraumöffnung (2) und den beiden Öffnungen (3) für die Befestigungsschrauben. Die Brennraumöffnung (2) ist mit einer U-förmig über den Rand gebogenen ringförmigen metallischen Einfassung versehen.

Gemäß dem Querschnittsbild der Figur 2 besteht die Zylinderkopfdichtung aus einem Laminat aus sechs übereinanderliegenden Metallblechplatten (5 bis 10) etwa gleicher Dicke. Die oberste Lage (5) liegt nach dem Einbau am Zylinderkopf aus Aluminium an und besteht daraufhin aus Aluminium. Die darunterliegenden Metallblechlagen (6 bis 10) bestehen aus unterschiedlich legierten Stählen mit daraufhin unterschiedlichen thermischen Ausdehnungskoeffizienten, wobei die Metallblechlagen (6 bis 10) so übereinanderliegend angeordnet sind, daß ihr thermischer Ausdehnungskoeffizient von der oberen Lage (6) zur unteren Lage (10) stufenweise so abnimmt, daß der thermische Ausdehnungskoeffizient der Lage (10) dem des Gußeisens des Motorblockes entspricht. Die U-förmig über den Öffnungsrand der Brennraumöffnung (2) gebogene metallische Einfassung dient zur losen Befestigung der einzelnen Metallblechlagen (5 bis 10) sowie zum Kantenschutz am Öffnungsrand (2).

**Patentansprüche**

1. Metallische Flachdichtung aus einem Laminat übereinanderliegender Metallblechplatten zur Abdichtung von Bauteilen aus Werkstoffen mit unterschiedlichen thermischen Ausdehnungskoeffizienten, wie insbesondere eine Zylinderkopfdichtung für Verbrennungskraftmaschinen, mit einem Zylinderkopf aus Aluminium oder einer Aluminiumlegierung und einem Motorblock aus einer Gußeisenlegierung, dadurch gekennzeichnet, daß die übereinanderliegenden Metallblechplatten (5 bis 10) aus Metallen und/oder Metallegierungen mit unterschiedlichen thermischen Ausdehnungskoeffizienten bestehen, und daß die Metallblechplatten (5 bis 10) mit sich stufenweise steigernden thermischen Ausdehnungskoeffizienten übereinanderliegend angeordnet sind.

2. Flachdichtung nach Anspruch 1, dadurch gekennzeichnet, daß die äußeren metallischen Deckplatten (5, 10) der Flachdichtung (1) etwa den thermischen Ausdehnungskoeffizienten des Bauteiles besitzen, an dem sie nach dem Einbau abdichtend anliegen.

3. Flachdichtung nach Anspruch 1, dadurch gekennzeichnet, daß der höchste thermische Ausdehnungskoeffizient der Metallblechplatten (5 bis 10) kleiner ist als der des Bauteiles mit der größten thermischen Ausdehnung, und daß der kleinste thermische Ausdehnungskoeffizient der Metallblechlagen (5 bis 10) größer ist als der des Bauteiles mit dem geringsten thermischen Ausdehnungskoeffizienten.

4. Flachdichtung nach den Ansprüchen 1 bis 3, dadurch gekennzeichnet, daß die Dicke der Metallblechplatten (5 bis 10) etwa gleich groß ist.

5. Flachdichtung nach den Ansprüchen 1 bis 4, dadurch gekennzeichnet, daß die Unterschiede der thermischen Ausdehnungskoeffizienten zwischen den aufeinanderliegenden Metallblechplatten (5,6; 6,7; 7,8; 8,9; 9,10) etwa gleich groß sind.

6. Flachdichtung nach den Ansprüchen 1 bis 5, dadurch gekennzeichnet, daß eine Flachdichtung (1) aus 5 bis 8 Metallblechlagen (5 bis 10) besteht.

FIG. 1

FIG. 2

Europäisches
Patentamt

**EUROPÄISCHER RECHERCHENBERICHT**

Nummer der Anmeldung

EP    92 10 0963

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-3 924 863 (S. NAKANO)<br>* Ansprüche 1-8; Abbildungen 2,3 *<br>--- | 1 | F16J15/08 |
| A | US-A-2 034 610 (J.D. DICKSON)<br>* Spalte 2, Zeile 67 - Zeile 75; Abbildungen 2-8 *<br>--- | 1,4,6 | |
| A | FR-A-1 299 703 (THE CORRUGATED PACKING & SHEET METALL)<br>* Seite 4, linke Spalte, Zeile 10 - Zeile 17; Abbildungen 13,14 *<br>--- | 1 | |
| A | DE-A-3 633 988 (NIPPON GAKKI SEIZO K.K.)<br><br>----- | | |

**RECHERCHIERTE SACHGEBIETE (Int. Cl.5)**

F16J
F02F

Der vorliegende Recherchenbericht wurde für alle Patentansprüche erstellt

| Recherchenort | Abschlußdatum der Recherche | Prüfer |
|---|---|---|
| BERLIN | 03 JUNI 1992 | HOFFMANN M. |